Europäisches Patentamt

European Patent Office

Office européen des brevets

(11) Publication number: **0 430 716 A2**

# EUROPEAN PATENT APPLICATION

(21) Application number: 90313076.3

(51) Int. Cl.5: **G06F 9/44**

(22) Date of filing: 30.11.90

(30) Priority: 30.11.89 US 443616
30.11.89 US 443621

(43) Date of publication of application:
05.06.91 Bulletin 91/23

(84) Designated Contracting States:
DE FR GB Bulletin 00/2

(71) Applicant: EMTEK HEALTH CARE SYSTEMS INC.
2929 South Fair Lane
Tempe, Arizona 85282(US)

(72) Inventor: Norden-Paul, Ronald Evan
1350 E Cholla
Phoenix, Arizona 85018(US)
Inventor: Person, Stanley Carl
1242 E Gary Circle
Mesa, Arizona 85203(US)

(74) Representative: Dunlop, Hugh Christopher et al
Motorola European Intellectual Property Operations Jays Close Viables Industrial Estate
Basingstoke, Hampshire RG22 4PD(GB)

(54) Data processing system.

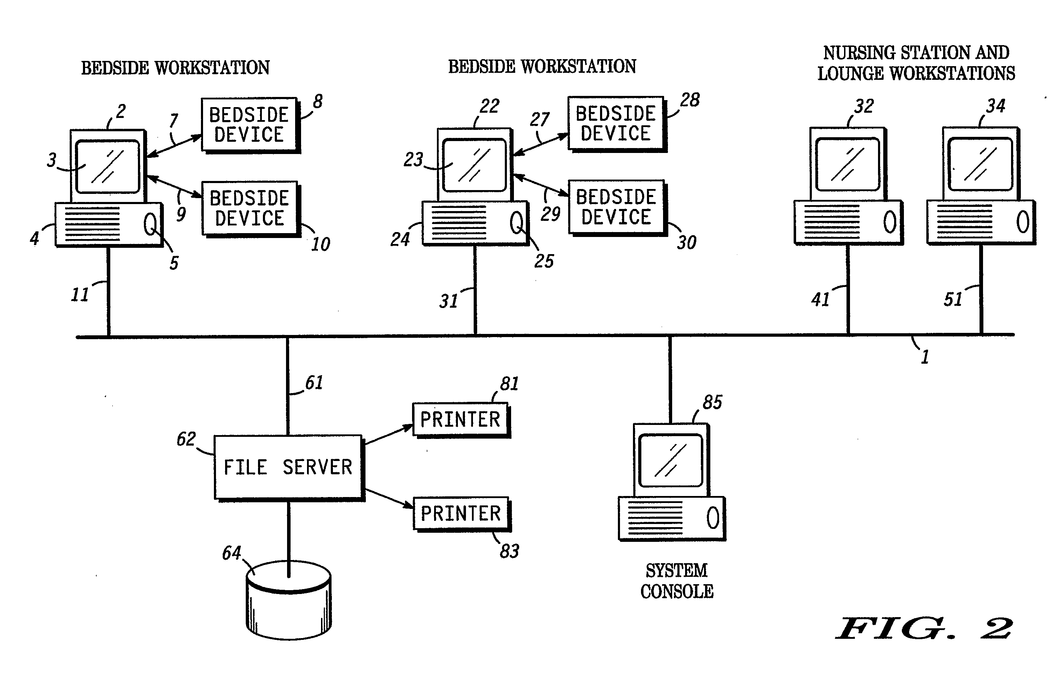

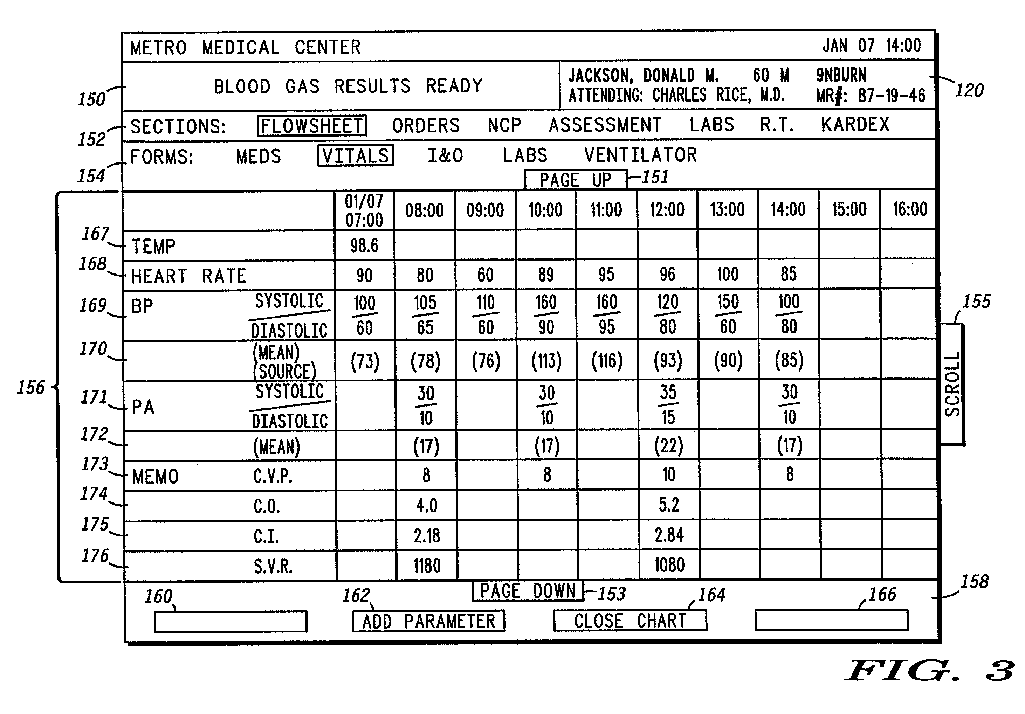

(57) A data processing system is provided comprising a processing unit (4, Fig. 2), a memory unit for storing a plurality of procedures, and a terminal unit comprising display means (2) for displaying an information form (Fig. 3) to a terminal user, said information form comprising a plurality of display tiles, and input means (5) for enabling said terminal user to enter an event into said system in the form of data or a command regarding said information form by selecting a portion of said form comprising at least one of said display tiles. A method is described for processing said event by at least one of said procedures and for providing to said terminal user a visual indication thereof.

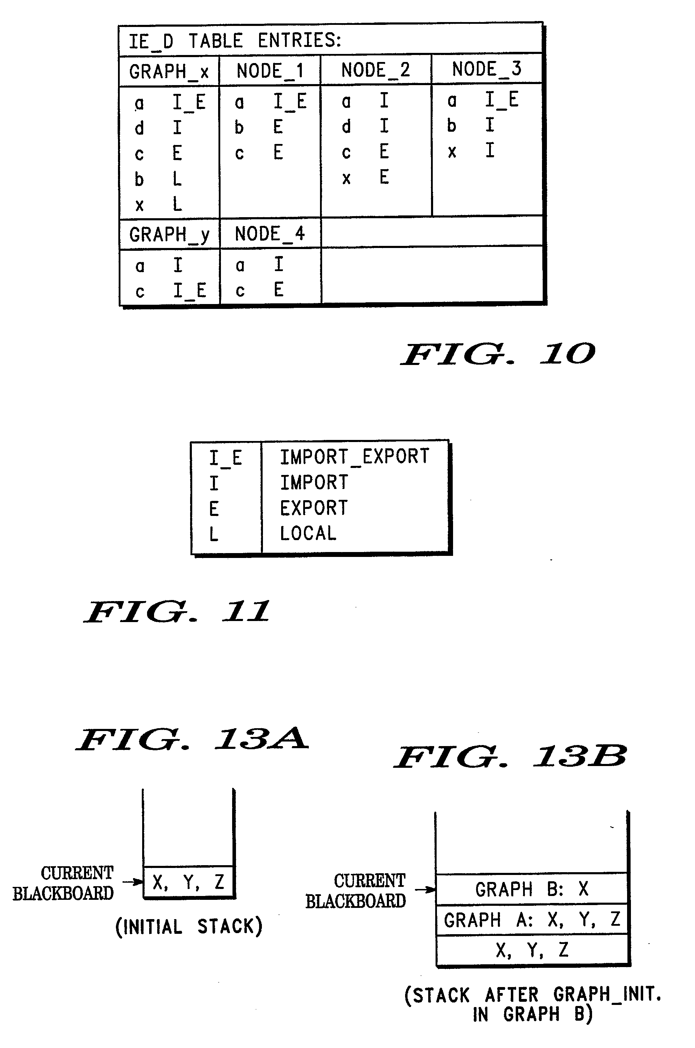

The procedures are represented by function graphs (500, Fig. 12A), each function graph including a plurality of nodes (501-505), including an initialization node (501) for handling initialization functions, a dialog node (502-504) for handling processing functions, and an exit node (505) for handling exit functions. The nodes may import and export variables, and the function graph includes an import table (Fig. 10) for specifying the import variables for each of the nodes and an export table (Fig. 10) for specifying the export variables for each of the nodes. The nodes are loosely coupled and need not be aware of the import/export variables for other nodes.

Xerox Copy Centre

BEDSIDE WORKSTATION

BEDSIDE WORKSTATION

NURSING STATION AND
LOUNGE WORKSTATIONS

BEDSIDE DEVICE

BEDSIDE DEVICE

BEDSIDE DEVICE

BEDSIDE DEVICE

FILE SERVER

PRINTER

PRINTER

SYSTEM CONSOLE

*FIG. 2*

EP 0 430 716 A2

## DATA PROCESSING SYSTEM

Related Invention

The present invention is related to the following invention, which is assigned to the assignee of the present invention:

Method for Generating Patient-Specific Flowsheets by Adding/Deleting Parameters, U.S. Pat. No. 4,878,175.

Technical Field

This invention relates generally to data processing systems and processes, and, in particular, to a method for constructing and executing an application comprising a plurality of procedures, wherein the procedures are represented by function graphs, each function graph including a plurality of nodes, and the function graphs including an import table for specifying import variables for each of the nodes.

Problem Addressed by the Invention

The present invention has utility in data processing systems in which applications are expressed as "directed graphs". Refer to Glossary appended hereto as Appendix A.

One of the purposes of expressing applications as directed graphs is so that the nodes of the graphs can be reused. The nodes may represent modular functions. By recombining old nodes and writing a few new ones, applications can be written with relatively less effort.

In a traditional application with a main procedure and various subroutines, the main procedure and subroutines can pass data to each other using parameters.

If the nodes of a directed graph pass data using traditional parameter-passing methods, the nodes have to know what data the nodes it interacts with are expecting. This limits the flexibility of how the nodes can be combined.

In an application expressed as a directed graph, the nodes of the graph can't use parameters (in the traditional sense) because each node is independent of the others, and therefore doesn't know what parameters the other nodes are expecting.

Using the herein-disclosed method of data import, nodes (and sub-graphs) can pass data by using import attributes, without explicitly knowing what data other nodes expect. Thus nodes can be combined in any order without changing the contents of the nodes.

Thus the present invention solves the problem of data-passing between independent, loosely coupled nodes (and sub-graphs) in an application expressed as a directed graph.

The present invention also couples an application expressed as directed graphs to an interface which is generating events.

A known prior application generation system is the Rapid/Use application system available from Interactive Development Environments, 595 Market Street, 12th Floor, San Francisco, California 94105.

However, Rapid/Use does not provide the capability of importing and exporting variables between loosely coupled nodes. Moreover, it is designed for line-by-line applications, not event-driven applications, such as one in which a user may select virtually any portion of an information screen as part of a user interface.

Brief Summary of Invention

According to the present invention, each node in a directed graph has associated with it a list of import attributes and export attributes. When it invokes a node, a graph manager initializes the values of import attributes with values that have previously been exported by other nodes in the same graph or with values that were imported by the parent graph. At any time during processing, but normally just before exiting, a node may export attribute values which can be imported by subsequent nodes in the graph.

Accordingly, it is an object of the present invention to provide a software architecture which permits the nodes of a directed graph to pass parameters between themselves, while maintaining loose coupling between such nodes.

Thus the nodes retain their simplicity and modularity. They are therefore relatively easy to comprehend, to maintain, and to re-use.

3

It is another object of the present invention to provide a software architecture in which import and export values are associated with attributes via a modifiable table.

These and other objects are achieved in accordance with one embodiment of the invention by providing a method of constructing and executing an application comprising a plurality of procedures in a data processing system, wherein the improvement comprises (a) representing at least one of the procedures by a function graph comprising a plurality of nodes; and (b) providing an import table for specifying the import variables for each of the nodes.

In another embodiment of the invention is provided a method of constructing and executing an application comprising a plurality of procedures in a data processing system, wherein the improvement comprises (a) representing at least one of the procedures by a function graph comprising a plurality of nodes; and (b) providing an export table for specifying the export variables for each of the nodes.

Brief Description of the Drawings

The invention is pointed out with particularity in the appended claims. However, other features of the intention will become more apparent and the invention will be best understood by referring to the following detailed description in conjunction with the accompanying drawings in which:

FIG. 1 shows a block diagram illustrating, in general, the patient care process in a typical hospital environment.

FIG. 2 shows a block diagram illustrating a preferred embodiment of a data processing system incorporating the method of the present invention.

FIG. 3 shows a typical Flowsheet information screen, illustrating both measured and calculated patient parameters in the automated clinical records system shown in FIGS. 1 and 2.

FIG. 4 shows a block diagram illustrating the relationship of the forms manager to the application program and database.

FIG. 5 shows a block diagram of the application software architecture of the present invention.

FIGS. 6A and 6B illustrate two function graphs.

FIG. 7 illustrates the structure of an dialog node

FIG. 8 shows a function graph in which some nodes import various attributes, and other nodes export various attributes.

FIG. 9 shows another function graph.

FIG. 10 represents a table giving the import and export parameters for the nodes of the function graph shown in FIG. 9.

FIG. 11 defines certain symbols appearing in the table of FIG. 10.

FIGS. 12A-12D illustrate the use of imports and exports in a function graph which includes several layers of sub-graphs.

FIGS. 13A-13G illustrate the blackboard stack(s) corresponding to FIGS. 12A-12D.

FIGS. 14A-14D show a flow diagram corresponding to the pseudo-code of Appendix B, illustrating how imports and exports are associated with attributes according to a preferred embodiment of the present invention.

Background Description of the Data Processing System
Patient Care Process

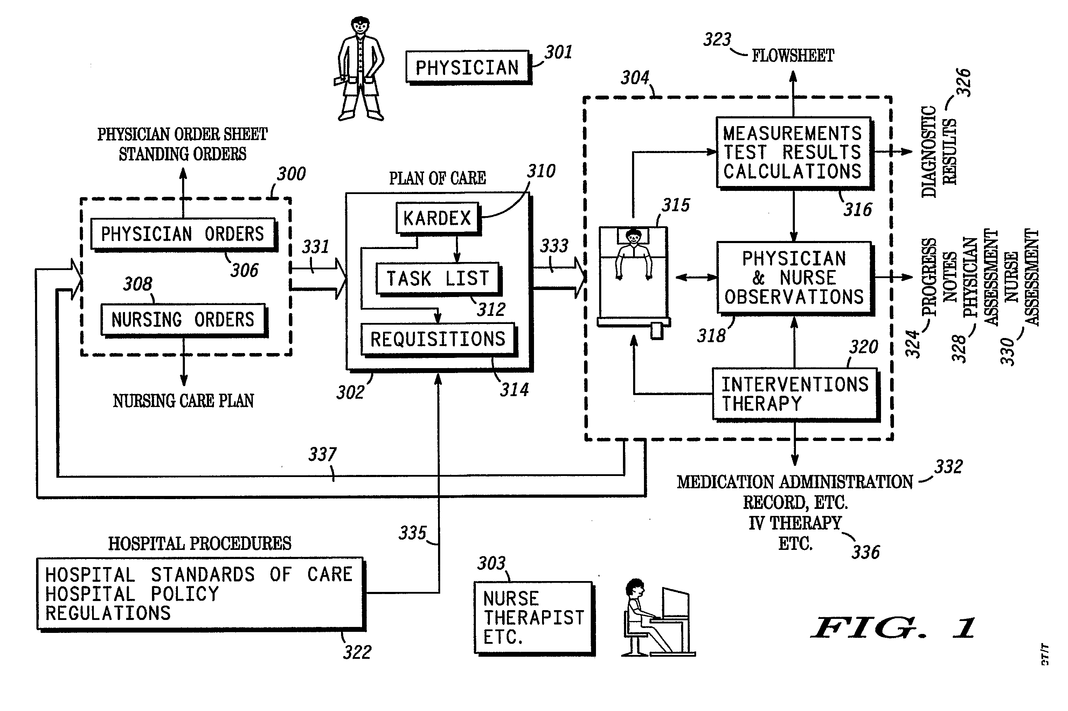

FIGS. 1-4 provide background description of a system in which the present invention has been implemented and provides utility. Such system is further described in the Related Inventions cited above. However, it should be understood that the present invention has broad utility in any data processing system which must be capable of a high degree of customization and is not intended to be limited to implementations such as those relating to the system shown in FIGS. 1-4.

FIG. 1 shows a block diagram illustrating in general the patient care process in a typical hospital environment.

Physician 301 is responsible for the management and care of the patient 315 throughout the hospital stay. On admitting a patient to the hospital a physician will assess the patient and arrive at a diagnosis. Based on the diagnosis the physician will write a plan of care in his progress notes and generate a list of physician orders 306 to be executed by nursing and other hospital personnel 303. The physician's orders 306 are the source for the Kardex 310, Task List 312, Requisitions 314, and other associated forms that assist in the overall execution of the patient care plan 302. Nursing orders 308 also generate corresponding interventions in the Kardex 310 and Task List 312.

Other interventions in the Kardex 310 and Task List 312 are mandated by hospital procedures 322, which include hospital standards of care, hospital policy, and regulations. The nurse or other hospital personnel 303 executes the orders as written in the Kardex 310 and Task List 312 and then charts on the appropriate forms to satisfy the requirement for providing necessary documentation.

Other forms such as Flowsheet 323 and Diagnostic Results 326 document specific measurements, tests results, and/or calculations 316 performed directly on the patient or on the patient's tissue, fluids, etc. Similarly, interventions and other therapy 320 are documented on a Medication Administration Record form 332 and other forms.

The nurse and physician observe the patient 315 and the results of interventions and therapy 320 and document their observations 318 in progress notes 324 and other associated forms.

From the observations 318 and progress notes 324 the physician 310 or nurse 303 writes a new set of orders 300 corresponding to the present condition of the patient 315.

System Hardware

Referring now to FIG. 2, a block diagram is shown of a typical hardware configuration for implementing the automated clinical records system of the present invention. FIG. 2 shows a distributed computer system comprising a plurality of workstations or terminals 2, 22, 32, 34 and 85 coupled to a local area network (LAN) 1.

The system is typically installed for use in a nursing care unit, such as an intensive care unit, in a hospital or clinic. Each of terminals 2 and 22 is located at the patient bedside. One terminal may be dedicated to the use of a single patient, or it may be used for multiple patients. Terminals 32 and 34 may be located at a nursing station or nurse/physician lounge area. Terminal 85 is the system console which is used by a system administrator to configure and maintain the system and to provide additional services, such as displaying system status and error messages, archiving, and performing diagnostics.

Each bedside workstation or terminal, such as terminal 2, includes a video display unit with a viewable screen 3 for displaying information to the viewer; a housing 4 containing computing, data storage, and communications equipment and having associated with it a keyboard and pointing device such as a mouse 5; and connections 7 and 9 to one or more bedside devices 8 and 10. Bedside devices 8 and 10 may take the form of patient monitoring equipment suitable for the patient undergoing care, such as an EKG monitor, respiratory monitor, etc. Bedside terminal 22 may be coupled to a different set of bedside devices 28 and 30 from those coupled to terminal 2.

The nursing station or lounge terminals 32 and 34, and system console 85, may be identical to those used in the patient care unit but without the bedside device connections, or they may comprise slightly different equipment (e.g. personal computers) so long as they provide similar functionality.

Also coupled to the LAN 1 is a file server 62 and associated disc storage device 64. The file server 62 provides controlled access by the workstations 2, 22, 32, 34, and 85 to write information to and read information from disc storage device 64.

Optionally coupled to LAN 1 may be interfaces (not shown) to couple various system peripheral equipment to the LAN 1. For example, remote access modems may be coupled to one of such interfaces to provide access to the system from remote terminals (not shown) located elsewhere in the hospital or located offsite, such as at a physician's residence. Remote access may also be employed to diagnose system problems from an off-site facility. A laboratory system may be connected to interface to permit the communication of laboratory information between the laboratory system and the clinical management system. An order communication system may be coupled to an interface to permit orders to be communicated from the system to other hospital systems (e.g. pharmacy or laboratory) and *vice versa*. An archival storage device may be coupled to an interface to permit any information stored in the system to be safe-stored on suitable archival media, such as magnetic tapes or optical discs.

Printers 81 and 83 are coupled to file server 62 to allow patient information to be printed for the convenience of hospital personnel and to maintain a suitable legal record of all observations, orders, parameter readings, care plans, and other patient information regarding the monitored patients. Printers 81 and 83 may be any suitable printers such as, for example, laser printers or high speed dot matrix printers. A printer may optionally be coupled to the bedside terminal and/or the terminal at the nursing station or lounge, if desired.

In operation, the system user, typically a nurse or physician, conducts a dialog with the system through the use of the keyboard, mouse, or other appropriate means for entering information such as a light-pen, touch-pad, trackball, etc.

"Icons", screen-sensitive areas, or the equivalent, or any combination thereof which is appropriate to the end application, may also be provided. "Icons" are symbols displayed on the screen whose functions are defined for the user by the system in view of the current screen context, and which can thus be readily changed according to the immediate requirements of the user application. In the present invention icons are selected by the system user by moving a screen cursor with the mouse and "clicking" on the icon, i.e., depressing the mouse button while the cursor overlies the icon.

The user provides information or queries to the system by means of the keyboard and/or pointing device(s), and he receives information from the system by means of information displayed on the screen and/or through audible signals which could include, in an alternative embodiment, speech synthesis.

Patient Flowsheet

FIG. 3 shows a Flowsheet information screen in the automated clinical records system of the present invention.

The Flowsheet screen shown in FIG. 3 shows Vital Signs information for patient Donald M. Jackson which has been recorded at approximately hourly intervals. For example, Temperature (row 167), Heart Rate (row 168), and Systolic Arterial Pressure and Diastolic Arterial Pressure (row 169) have been measured and recorded.

Forms Manager

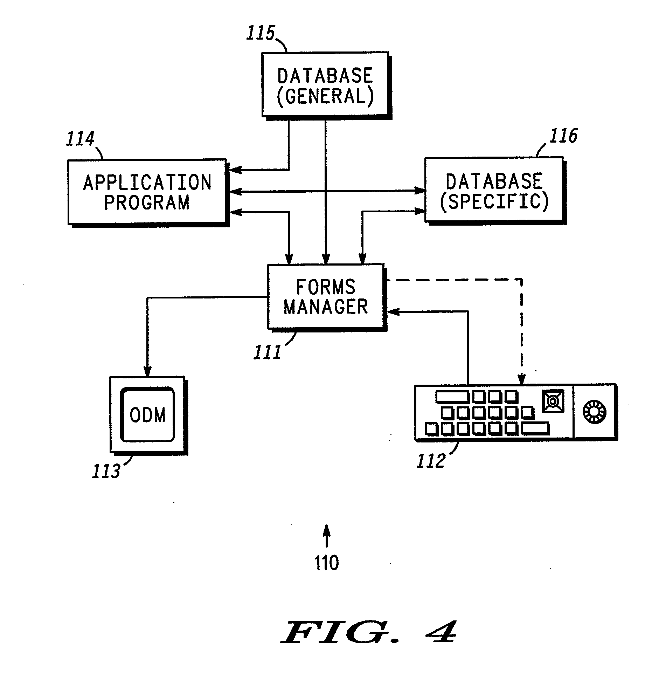

FIG. 4 shows a block diagram illustrating the relationship of the forms manager to the application program and database. A forms manager 111 is used as an interface, or buffer, among and between the input, output, and system applications and databases.

An input device 112 is coupled to forms manager 111. Input device 112 is illustrated as a keyboard with a joy stick but may be any type of input device. In general, the communication is from input device 112 to forms manager 111. However, there may be a need for forms manager 111 to operate visual or acoustic devices on input device 111. For this reason, there may be some communication from forms manager 111 to input device 112.

Also coupled to forms manager 111 is an operator display module 113. Display 113 is typically a cathode ray tube, but may be any of numerous types of displays such as the various types of flat panel displays. Communication is generally from forms manager 111 to display 113. However, a touch sensitive screen or other type of input device may be incorporated in the system requiring communication from display 113 to forms manager 111.

Forms manager 111 also interacts with the application programs 114 and the databases. The databases, for this particular example, are broken into a general database 115 and a specific database 116. It should be understood that while the database may be functionally separated, both may be contained in the same physical location.

In this type of electronic database, a cell in a flowsheet may have a form or report associated with it which expands on the information in the cell. This form may be comprised of various attributes and processing rules obtained from one or more object instances of one or more object classes.

An object instance is the instantiation of an object class. An object class is similar to a type (as used in programming languages) in that it defines a structure. The information for these flowsheet cells and the underlying forms comes from a database containing various patient records. Examples of forms and records are found in copending patent applications "A Method of Forming a Spreadsheet Display" and "Spreadsheet Cell having Multiple Data Fields".

In operation, objects are entered through input device 112 to the forms manager. This input is checked and stored in database 116 for the particular patient. When a form is to be displayed, forms manager 111 obtains a list of objects to be displayed. One source of objects is application program 114. The forms manager then retrieves the display tiles associated with the objects from database 115. The data to be placed in the tiles is then obtained from database 116. Using these inputs, forms manager 111 develops a form which is displayed on display 113.

Application Software Architecture

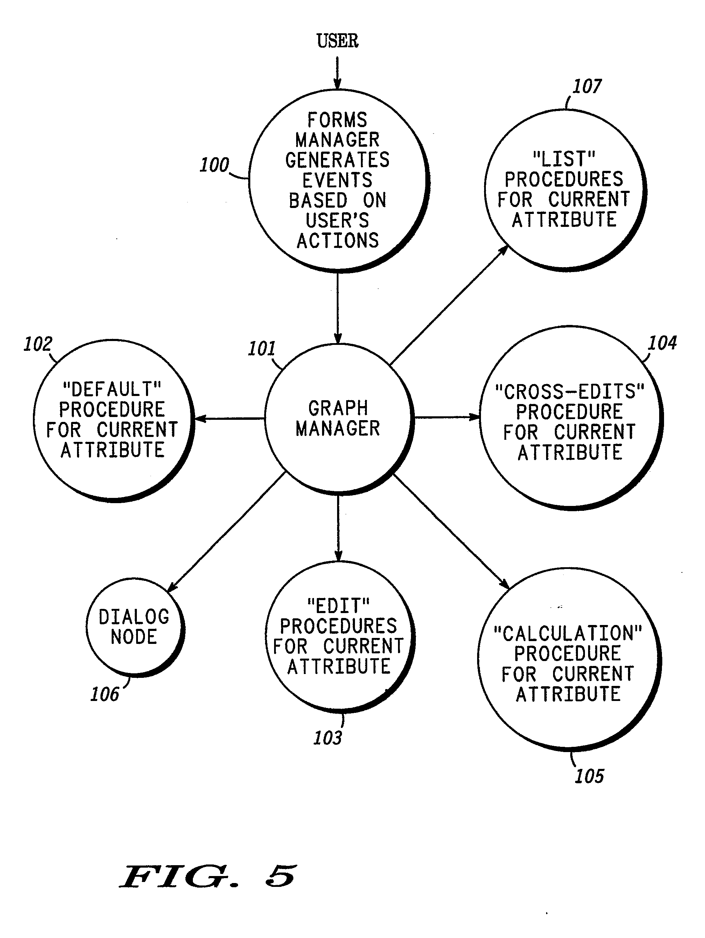

FIG. 5 shows a block diagram of the application software architecture of the present invention.

The application software architecture is a way to specify action-oriented applications. The forms manager 100 translates user actions into "events" and sends the events to the graph manager 101.

The graph manager 101 screens incoming events, takes care of calling DECL's at appropriate times, handles dialog node sequencing, and import/export data flow.

The user performs actions. The forms manager 100 generates events based on the user's actions. The graph manager 101 catches the events generated by the forms manager 101.

An application written within the application software architecture consists of a set of dialog nodes collected into graphs (and possibly sub-graphs) and graph table entries that describe the graph. Dialog nodes in the application use various attributes. Each attribute has associated with it a group of procedures, any of which is optional. These procedures are defaults, edits, calculations, and lists, collectively known as DECL's.

DEFAULT procedures are indicated generally by bubble 102; EDIT procedures by bubble 103; CALCULATION procedures by bubble 105; CROSS-EDIT procedures by bubble 104; and LIST procedures by bubble 107.

Function Graphs

The coordinating logic of an application is expressed as a set of function graphs. A function graph is a set of nodes and arcs connected into a directed graph. A function graph allows an application to be divided into a number of independent but cooperating modules. Each node on the graph has a well defined function that it performs when invoked. (A node in a graph may represent a sub-graph.) The application designer specifies applications in terms of these graphs, drawing from a library of existing nodes and possibly adding new nodes to the library.

Function graphs are defined by a set of triplets of the form: {source_node arc, destination_node}. Each function graph has at least one triplet of the form {GRPH_INIT, arc, destination_node}. GRPH_INIT is a "pseudo-node" that defines the entry points to the graph. Each of the arcs that come out of GRPH_INIT should match one of the arcs coming into the function graph from its parent graph.

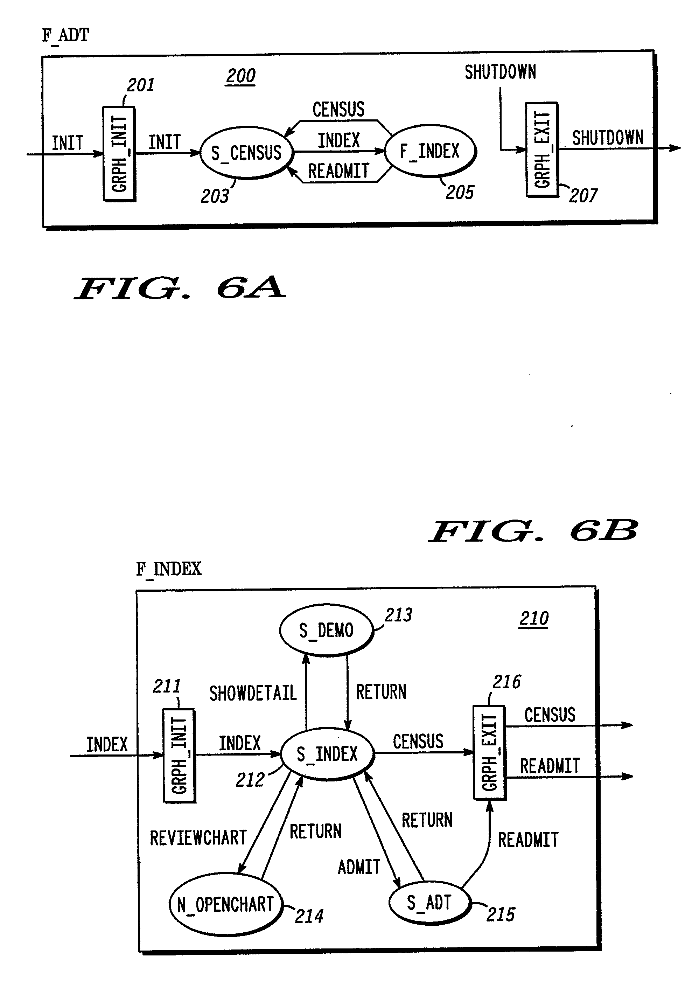

FIGS. 6A and 6B illustrate two function graphs. FIG. 6A illustrates a graph entitled "f_adt", and FIG. 6B illustrates a graph entitled "f_index", corresponding to the procedural node 205 of the same name within graph 200 of FIG. 6A.

In graph 200, node f_index is "called" via arc INDEX. In graph 210, an arc called INDEX links GRPH_INIT 211 with the first node 212 of the graph.

To exit a graph, a least one triplet of the form {source_node arc, GRPH_EXIT} should exist. GRPH_EXIT is a "pseudo-node" that defines the exit points of the graph. Each of the arcs coming into GRPH_EXIT should match one of the arcs leaving the function graph in its parent graph.

*Graph_mgt* is responsible for managing the execution of these function graphs. Each node returns a status value when it completes. *Graph_mgt* uses the status value to determine which arc of the parent graph to follow, and therefore which node to invoke next. In addition, an invoked node is passed the name of the arc which invoked it, giving the node additional information to perform its processing. A node on a function graph may be one of several node types, or it may be another function graph. This allows function graphs to be nested as required by the application.

Dialog Nodes

Each node in a function graph is structured as an event processor. Events are generated as a result of an action, such as clicking a mouse button or changing the value of a field. The body of the node is an event loop, processing each incoming event in sequence, until the node exits. Each node has a set of events that it understands, with code segments that define processing for each event.

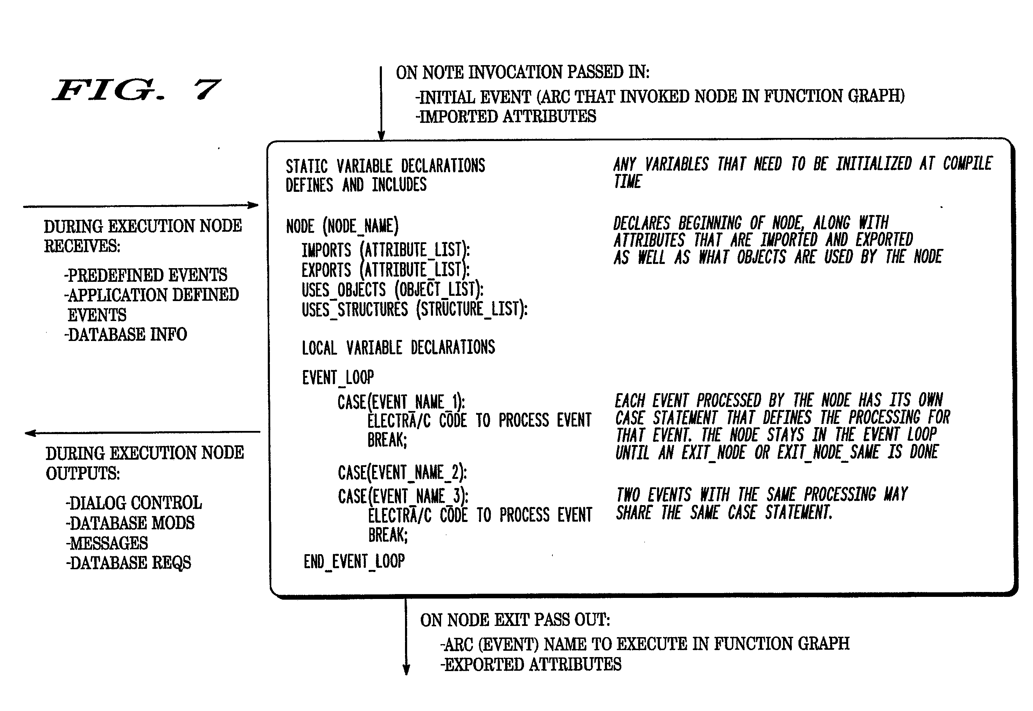

FIG. 7 illustrates the structure of an dialog node. Each node is structured as an event processor. The body of the node is an event loop, processing each incoming event in sequence, until the node is exited. Each node has a set of events that it understands, with a code segment that defines the processing for that event. The event processing falls into one or more of the following categories:

- Display and removal of forms
- Display of a form menu
- Enabling / disabling of user entry into form data fields
- Acceptance / rejection user selection of a form object
- Creation / Modification / Deletion of object instances in the database (within the context of an object action).
- Dispatching of transactions to the database, rollback of previously entered object actions.
- Generation of messages to other processes (e.g. opening a patient chart, requesting the printing of a report, etc).

In order to perform this processing, the event-handling code typically needs to query the database, either for the currently selected object instance, or for other data in the database.

Events

Events come from two sources: incoming graph arcs to the node (the first event a node receives is the graph arc that caused the node to be invoked), and events generated by user dialog (i.e. events triggered by user actions). These events are divided into two classes: predefined events and application defined events. Predefined events are generated by system and/or user actions under well defined conditions. Every node must define processing for these events. Applications may also define events that are associated with form menu choices. An application-defined event is generated whenever its associated menu choice is selected by the user.

Graph Table

Function graphs are defined by entries in a table in the database (the "graph table"). The entries define the sequencing between graph nodes and between graphs. Each entry in the graph table contains a source node name, an arc name (event), a destination node name, and the name of the graph containing the source node. Thus, given a graph name, a source node, and an event, the graph manager can look up the name of the node to invoke next (the destination node).

There are three special node names that are reserved by the graph manager. Entries in the graph table with "graph_init" for the source node name are entry points into a graph. Entries with "graph_exit" for the destination node name are exit points from a graph.

The Graph Table appended hereto shows the entries for the two function graphs entitled "f_adt" and "f_index" shown in FIGS. 6A and 6B, respectively. For example, in graph "f_adt" an INIT event links source node GRAPH_INIT 201 and destination node S_CENSUS 203.

Event Handling Within the Graph Manager

Out of all the events (predefined and application defined), the graph manager catches/screens only six: DEFAULT,NEW, SIGN, OK, MORE, and CROSS_EDIT.

DEFAULT and CROSS_EDIT events are never passed on to the application dialog nodes; the others might be passed on after certain processing is completed.

Detailed Description - Import/Export

Each node has associated with it a list of import attributes and export attributes. When it invokes a node, the graph manager initializes the values of import attributes with values that have previously been exported by other nodes in the same graph or with values that were imported by the parent graph. At any time during processing (but normally just before exiting) a node may export attribute values which can be imported by subsequent nodes in the graph, imported by DECL's procedures that are executed any time after the attribute is exported (including before the exporting dialog node exits), and/or exported by the graph.

According to this method, import attributes are equivalent to "pass-by-value" parameters in that the node may use import attributes and even change them within the scope of the node, but any changes are discarded when the node exits.

Export attributes are equivalent to "pass-by-reference" parameters in that any changes made to the attribute remain after the node exits. An export attribute that is not imported has no value until the node sets it.

An attribute that is both imported and exported has an initial value, and the node may use the attribute before changing it.

Although the function of a node (or a graph, taken as an entity) is independent of that of other nodes in a graph, the node can "share" data with other nodes and with other graphs by importing and exporting attribute values.

Regarding syntax, a construct for specifying a node may take the form:

**Node(name)**
   **Imports(attribute_list);**
   **Exports(attribute_list);**

{

*Name* is the name of the node.

*Imports* defines all the attributes that the node imports values of (attributes must be defined in the system dictionary).

*Exports* defines the attributes that the node exports (attributes must be defined in the system dictionary).

For both import and export attributes, parameter declarations will be generated of the appropriate type based on these declarations (all import / export attributes are referenced via pointers).

All clauses except Node (i.e. *Imports* and *Exports)* are optional.

A node has no memory between invocations. Any information it wishes to retain can be exported and then re-imported. Information kept in local variables is maintained between events on the same invocation.

Each node has associated with it a list of import attributes and export attributes. When the node is invoked, the graph manager initializes the values of the import attributes with values which have previously been exported by other nodes in the same graph, or by values which have been imported by the parent graph itself. Imported attributes are passed by value, so any modifications by the importer are lost when the node exits, unless the value is exported out. When a node returns, it exports a set of attribute values which can be imported by subsequent nodes in the graph, or exported by the graph. All attributes are referenced by attribute name.

Import-export implements a method to input and output parameters when application node code is executed.

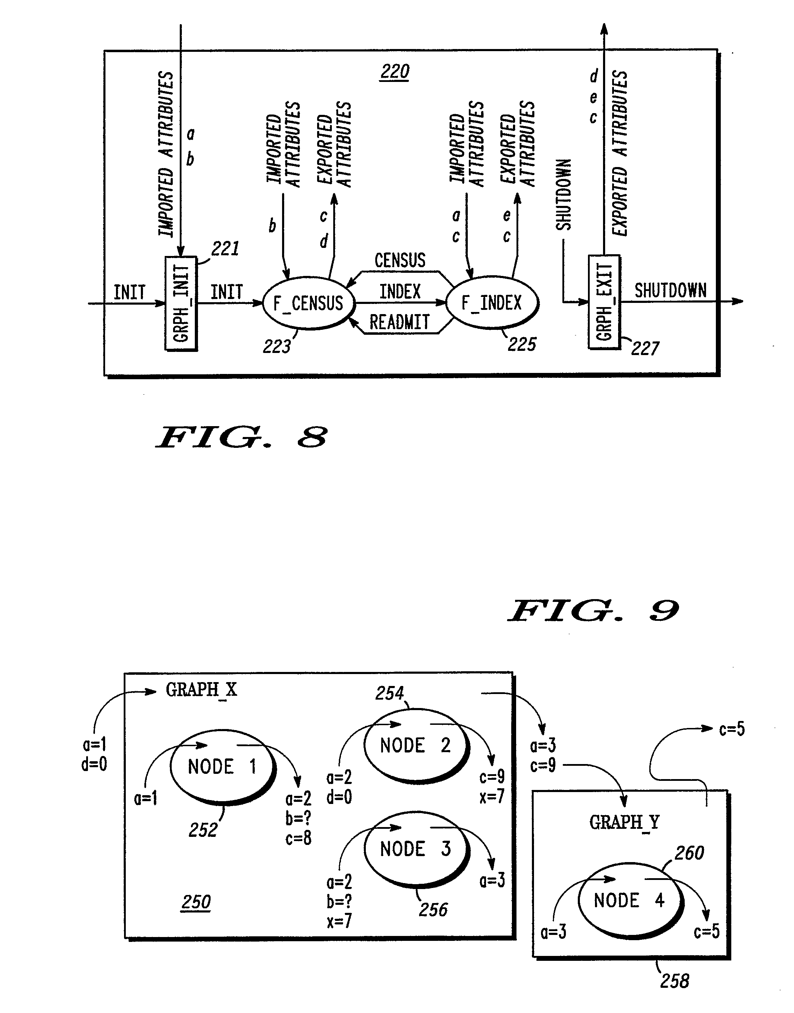

FIG. 8 shows a function graph in which nodes 221, 223, and 225 import various attributes, and nodes 223, 225, and 227 export various attributes.

Parameters *a, b, c, d,* and *e* are pointers to variables that are defined as a type of IMPORT, EXPORT, IMPORT_EXPORT, or LOCAL as follows:

| | |
|---|---|
| IMPORT - | The parameter is input only; it cannot be passed back out of a node or a graph as a parameter. Data items of this type can be defined at the graph level and at the node level. |
| EXPORT - | The parameter is output only; it cannot be input to a node or a graph as a parameter. Data items of this type can be defined at the graph level and at the node level. |
| IMPORT_EXPORT - | The parameter is both input and output; it can be input to a node or graph and passed back out as a parameter. Data items of this type can be defined at the graph level and at the node level. |
| LOCAL - | The parameter is local to the graph only. It cannot be imported to or exported from the graph, but can be used as an import, export or import_export type item by any other node in the same graph. Data items of this type can be defined at the graph level only. |

Information must be entered into appropriate system tables to define the rules for import-export.

Any data item defined as input to or output from a node must also be defined for the graph that contains that node. The following information is entered using the system table build/update program:

| | |
|---|---|
| *graph_name -* | the name of a graph for which you are defining an import-export item or the name of the graph that contains the node for which you are defining an import-export item. |
| *node_name -* | the name of a node for which you are defining an import-export item. When you are defining an item at the graph level, enter NULL_NODE here. |
| *attr_name -* | the name of the data item you wish to import or export. This data item must have been defined in the "attributes" table. |
| *ie_order -* | the sequence or order of this parameter in the list of parameters expected by the graph or node. |
| *ie_type -* | one of "import", "export", "imp_exp" or "local". "Local" can be defined only at the graph level. |

Two sets of keys are generated for accessing the runtime table, as follows:

key1 - *graph-name, node_name, ie_order.*

key2 - *graph_name, node_name, attr_name*

FIG. 9 shows another function graph comprising nodes GRAPH_X and GRAPH_Y. GRAPH_X contains nodes identified as Node_1, Node_2, and Node_3, each of which performs an executable application. GRAPH_Y contains Node_4, which also performs an executable application.

FIG. 10 represents an import/export table giving the import and export parameters for the nodes GRAPH_X, Node_1, Node_2, Node_3, GRAPH_Y, and Node_4 of FIG. 9.

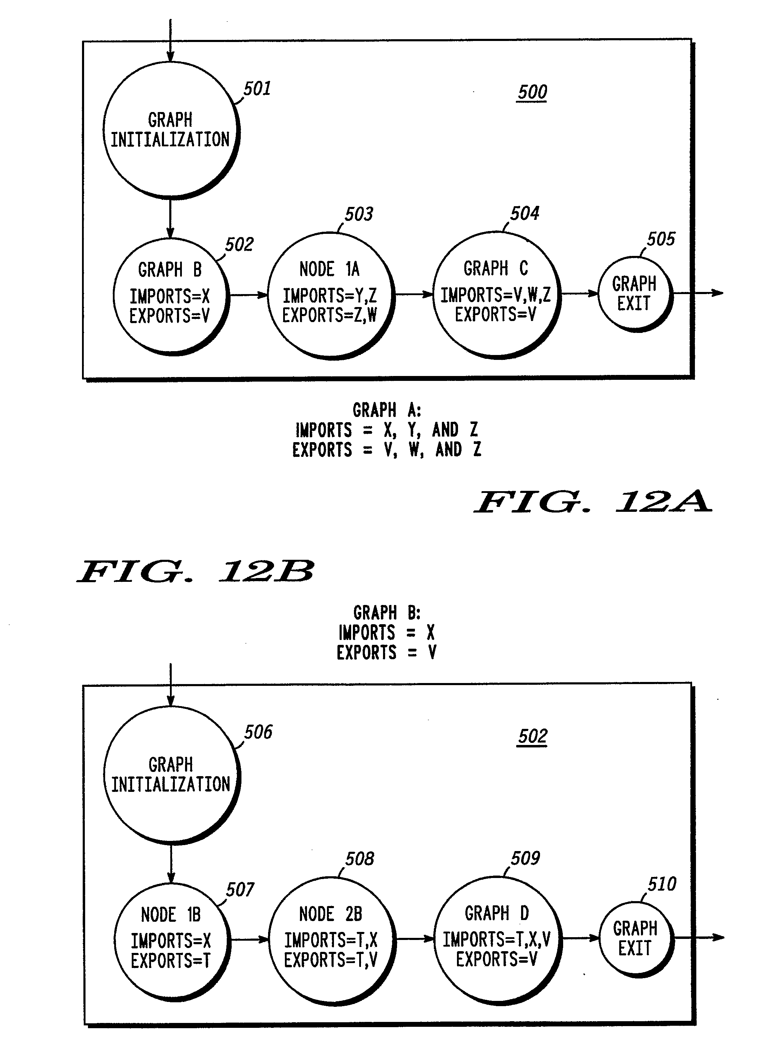

FIG. 11 defines the symbols I, E I_E and L appearing in the table of FIG. 10, as Import, Export, Import_Export, and Local, respectively.

In this example, GRAPH_X executes first, then GRAPH_Y executes. Within GRAPH_X, Node_1 executes first, followed by Node_2 and Node_3.

The symbols *a, b, c, d,* and *x* represent data items passed to the node code as parameters. GRAPH_X imports parameters *a* and *d*. GRAPH_Y imports the data elements *a* and *c* exported by GRAPH_X, and GRAPH_Y exports parameter *c*.

Detailed Implementation of Imports and Exports

Imports and exports are implemented using a stack of "blackboards". The application nodes in each graph can only look at their graph's blackboard (which is at the top of the stack).

The first node of each graph is called *"graph_init."* *Graph_init* is a graph manager function that sets up the current graph's blackboard. When invoked, graph_init creates a blackboard, copies the graph's imports onto the blackboard, and pushes the blackboard onto the blackboard stack. *Graph_init* handles a graph's import attributes.

After *graph_init* has been executed, sub-graphs and application nodes are invoked as defined in the corresponding graph table.

Application nodes and sub-graphs can reference and/or change values on the blackboard and add new values to the blackboard.

The last node in a graph is called *"graph_exit"*. *Graph_exit* copies its graph's export values from the current graph's blackboard to the calling graph's blackboard and pops the blackboard stack. *Graph_exit* handles a graph's export attributes.

Operation of Preferred Embodiment

The implementation of imports and exports is best explained using an example. Refer now to FIGS. 12A-12D.

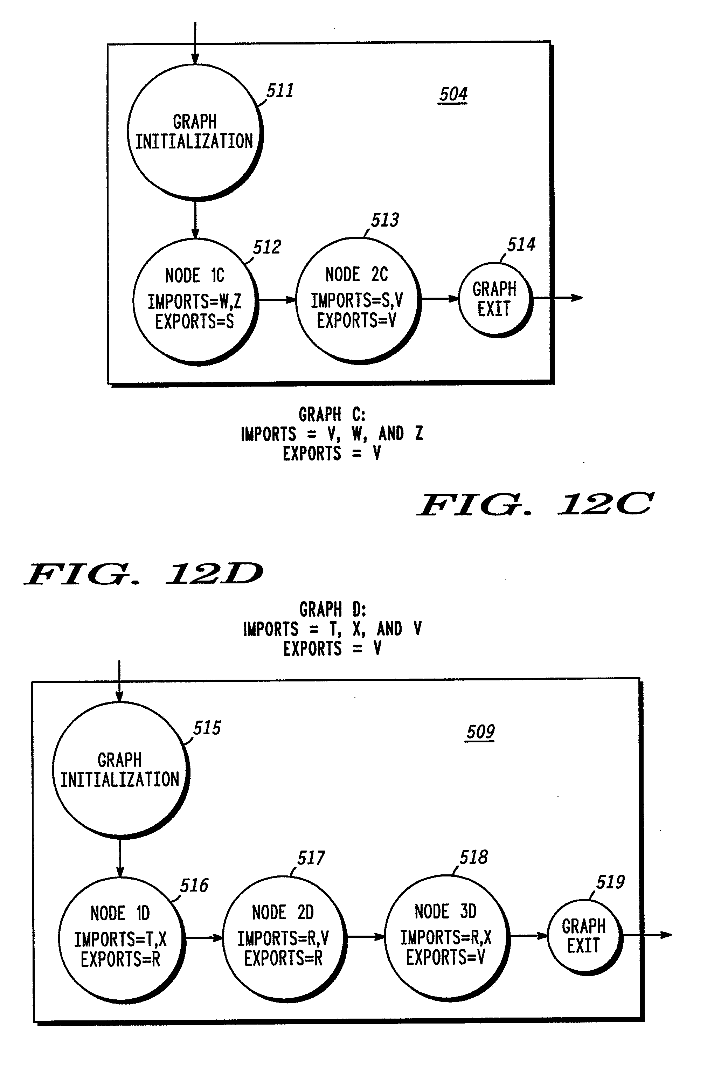

FIG. 12A shows a Graph A (500) comprising nodes 501-505. Node 502 (Graph B) comprises the sub-graph shown in FIG. 12B, and node 504 (Graph C) comprises the sub-graph shown in FIG. 12C.

In FIG. 12B, node 509 (Graph D) comprises the sub-graph shown in FIG. 12D.

Each of Graphs A-D is illustrated as having various imports and exports. For example, Graph A has *X* as an import and *V* as an export.

FIGS. 13A-13G illustrate the blackboard stack(s) corresponding to various stages of execution of the graphs shown in FIGS. 12A-12D.

Before the very first graph (Graph A) is invoked, the blackboard stack is empty. The graph manager initializes the blackboard stack by initializing a new blackboard with the imports *X, Y, Z* to the first graph (Graph A) and by pushing the blackboard onto the stack (FIG. 13A).

The graph manager then starts Graph A by invoking its first node, *graph_init* 501. *Graph_init* 501 creates a blackboard for Graph A, copies the imports *X, Y, Z* for Graph A from the blackboard at the top of the stack, and pushes Graph A's blackboard onto the stack. *Graph_init* 501 returns, and the graph manager determines the next node to invoke.

The next node in the graph is a sub-graph, Graph B. The graph manager invokes the first node in Graph B, which is *graph_init* 506 (FIG. 12B). *Graph_init* 506 creates a new blackboard for Graph B, copies the import X for Graph B from the blackboard at the top of the stack (Graph A's blackboard), and pushes Graph B's blackboard onto the stack (FIG. 13B). *Graph_init* 506 returns, and the graph manager determines the next node to invoke.

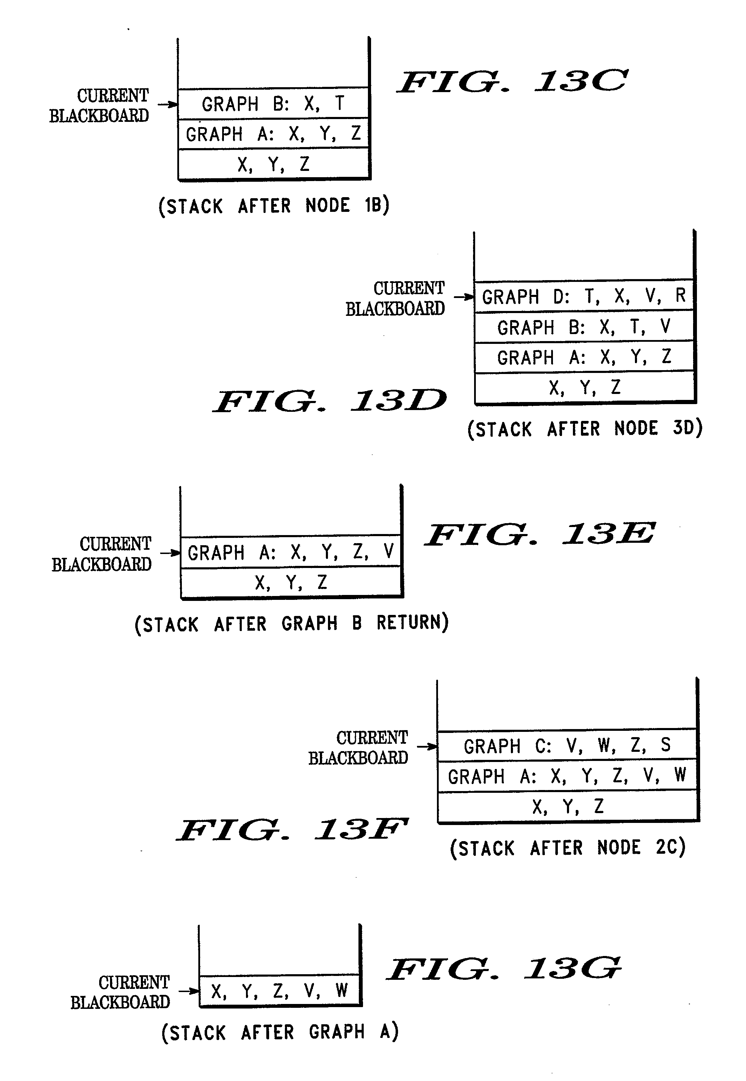

The next node is Node 1B, so the graph manager invokes Node 1B, which can reference (import) values from its blackboard (the one at the top of the stack), change values on the blackboard (export values that it imported), and/or add values to the blackboard (export new values). When Node 1B finishes, it returns (FIG. 13C blackboard), and the graph manager determines the next node to invoke.

Processing continues, with the graph manager invoking Node 2B, Graph D, Node 1D, Node 2D, and Node 3D in a manner similar to that described above.

Then Node 3D returns (FIG. 13D blackboard).

The graph manager determines that the next node is *graph_exit* 509, which it invokes. *Graph_exit* 509 pops Graph D's blackboard from the stack, copies Graph D's exports from the blackboard to the blackboard at the top of the stack (Graph B's blackboard), discards the popped blackboard, and returns.

The graph manager determines that the next node to invoke is *graph_exit* 510 of Graph B.

*Graph_exit* 510 pops Graph B's blackboard, copies Graph B's export *V* to Graph A's blackboard (on the top of the stack), discards Graph B's blackboard, and returns (FIG. 13E blackboard).

The graph manager then invokes Node 1A, *graph_init* 511 of Graph C (which pushes a blackboard for Graph C onto the stack), Node 1C, Node 2C (FIG. 13F blackboard), *graph_exit* 514 of Graph C (which pops Graph C's blackboard from the stack), and *graph_exit* 505 of Graph A, which pops Graph A's blackboard from the stack, leaving the initial blackboard on the stack (FIG. 13G blackboard).

Pseudo-code illustrating the import and export of parameters by the graph manager is provided in Appendix B hereto.

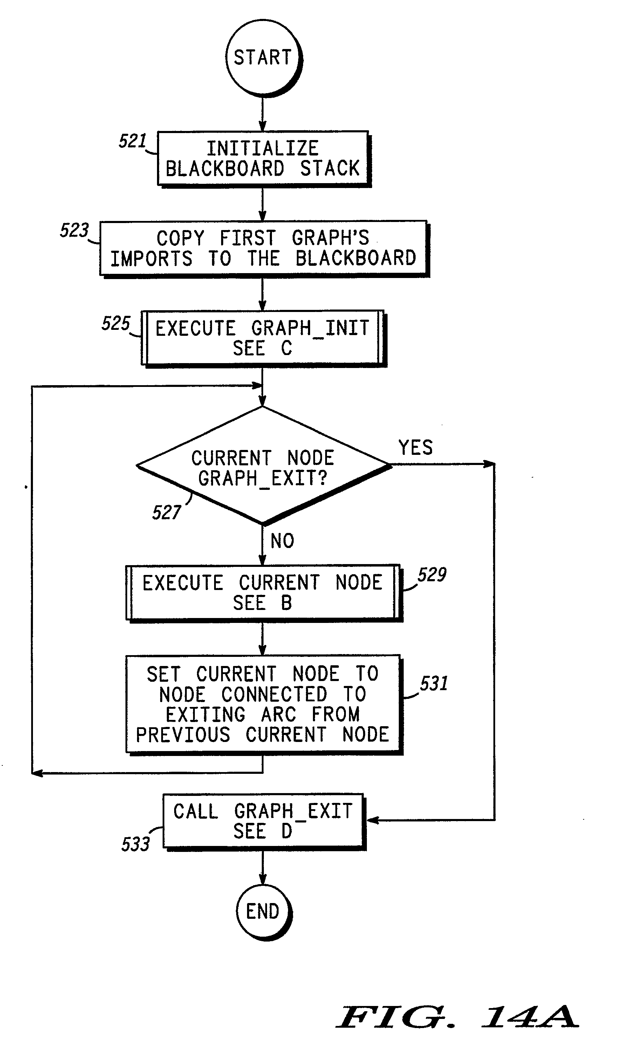

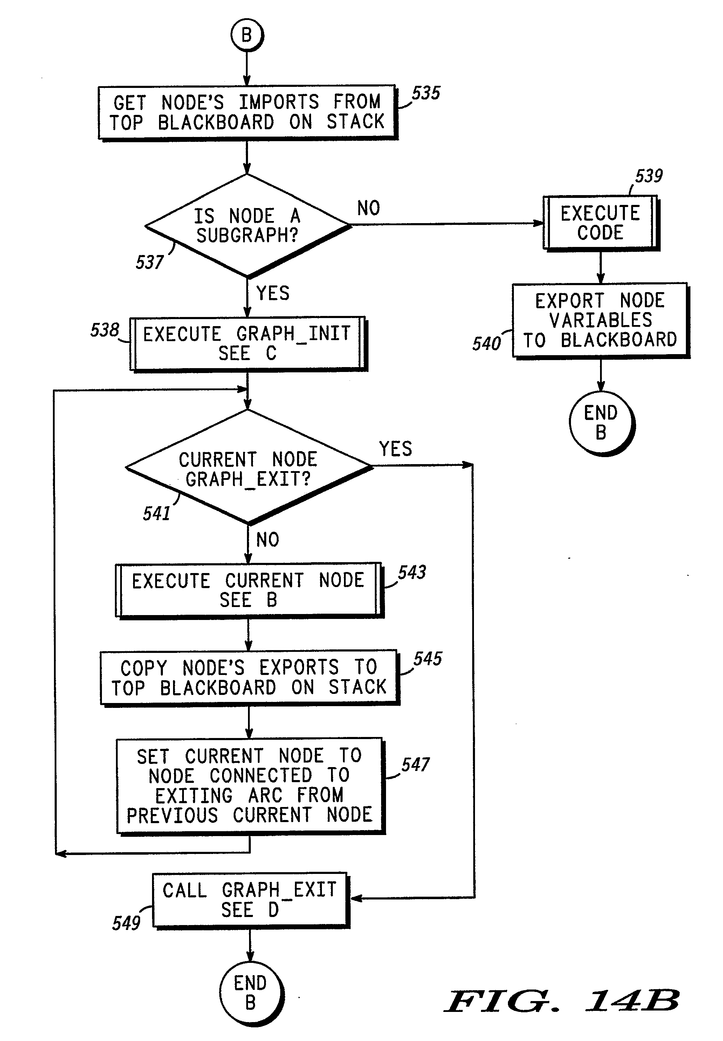

FIGS. 14A-14D show a flow diagram corresponding to the pseudo-code of Appendix B.

In FIG. 14A, the routine begins by entering box 521, where the blackboard stack is initialized. Next in box 523, the first graph's imports are copied onto the blackboard. Next in box 525, the Graph_Init routine shown in FIG. 14C is executed, whereupon the routine enters decision box 527.

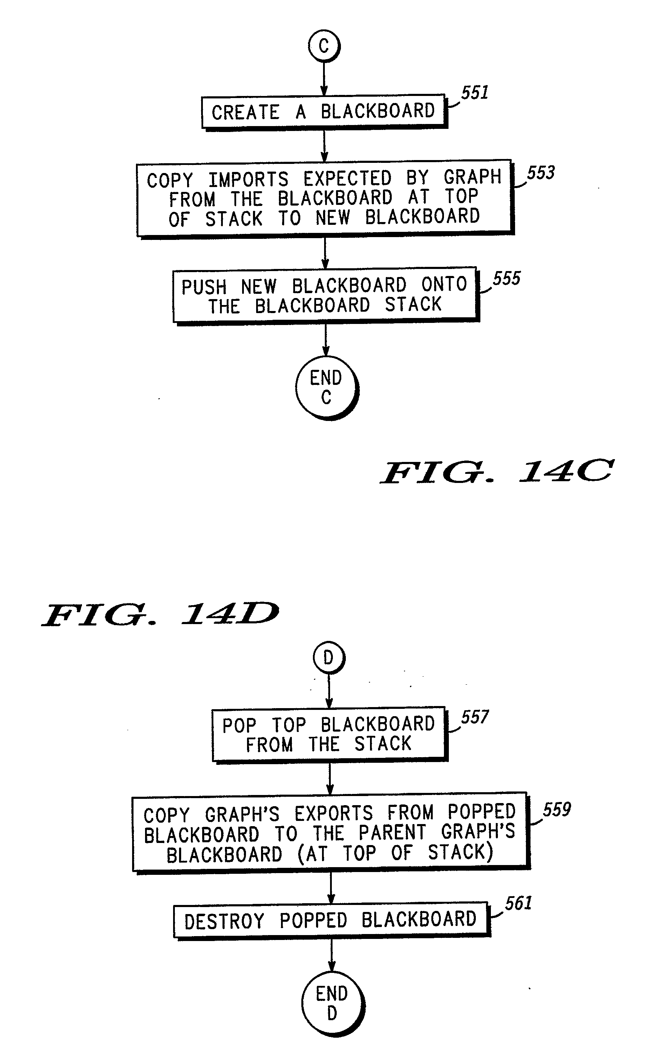

In decision box 527, if the current node is Graph_Exit, the routine proceeds to box 533, where the Graph_Exit shown in FIG. 14D is called; but if not the routine goes to box 529, where the current node is executed according to the routine shown in FIG. 14B.

After box 529, the routine goes to box 531, where the current node is set to the node connected to the exiting arc from the previous current node, and the routine returns to enter decision box 527.

In FIG. 14B, the routine begins by entering box 535, in which the node's imports are fetched from the top blackboard on the stack, and then proceeds to decision box 537.

In decision box 537, if the node is a sub-graph, the routine goes to box 538, where Graph_Init is executed; if not, it goes to box 539, where the node's code is executed, and then to box 540, where the node variables are exported to the blackboard.

From box 538, the routine goes to decision box 541. In decision box 541, if the current node is Graph_Exit, the routine goes to box 549, where Graph_Exit is called; if not, it goes to box 543, where the current node's code is executed; i.e. Routine B is entered again. It will be noted that Routine B is recursive.

From box 543 the routine goes to box 545, where the node's exports are copied to the top blackboard on the stack, and then it goes to box 547, where the current node is set to the node connected to the exiting arc from the previous current node. From box 547 the routine returns to enter decision box 541.

In FIG. 14C, Routine C begins by entering box 551, where a blackboard is created. Next, in box 553, the imports expected by the graph are copied from the blackboard at the top of the stack to a new blackboard. Finally, in box *555,* the new blackboard is pushed onto the blackboard stack, and the routine exits.

In FIG. 14D, Routine D begins by entering box 557, where the top blackboard is popped from the stack. Next, in box 559, the graph's exports are copied from the popped blackboard to the parent graph's blackboard at the top of the stack. Finally, in box 561, the popped blackboard is destroyed, and Routine D exits.

It will be apparent to those skilled in the art that the disclosed invention may be modified in numerous ways and may assume many embodiments other than the preferred form specifically set out and described above.

For example, the division of functionality between the graph manager and the forms manager may be altered in different ways, so that one may perform functions described herein as performed by the other, and *vice versa.*

Accordingly, it is intended by the appended claims to cover all modifications of the invention which fall within the true spirit and scope of the invention.

| Graph Name | Source Node | Event | Destination Node |
|---|---|---|---|
| f_adt | graph_init | INIT | s_census |
| f_adt | s_census | INDEX | f_index |
| f_adt | f_index | CENSUS | s_census |
| f_adt | f_index | READMIT | s_census |
| f_adt | null_node | SHUTDOWN | graph_exit |
| f_index | graph_init | INDEX | s_index |
| f_index | s_index | SHOWDETAIL | s_demo |
| f_index | s_index | REVIEWCHART | n_openchart |
| f_index | s_index | ADMIT | s_adt |
| f_index | s_index | CENSUS | graph_exit |
| f_index | s_demo | RETURN | s_index |
| f_index | n_openchart | RETURN | s_index |
| f_index | s_adt | RETURN | s_index |
| f_index | s_adt | READMIT | graph_exit |

## GRAPH TABLE

**APPENDIX A**
**GLOSSARY**

| | |
|---|---|
| *Arc =* | a transition between nodes representing an event; it is represented graphically as a line into or out of a node. |
| *Attribute =* | a field within an object class, e.g. patient i.d. |
| *Attribute name =* | an identifier by which the attribute is selected. |
| *Attribute table =* | a table containing the definition of every attribute in the entire system, including the associated attribute name, calculation procedure, default procedure, edit procedure (single-field edits, cross-field edits), list procedure, transform procedures, and type name. |
| *Attribute type =* | defines physical characteristics of an attribute. |
| *Blackboard =* | an area of memory reserved for use by the nodes of the current directed graph. All of a graph's imports and exports are stored in its blackboard until the procedure exits from the graph. |
| *DECL's =* | Default, Edit, Calculation, and List procedures. These are associated with attributes, not with specific applications. An attribute may have any combination of DECL's (or no DECL's) associated with it. |
| *Calculation procedure =* | defines a way of deriving the value of an attribute based on other information in the database. Initiated when a value is entered into the database (by the user or otherwise) for one of the triggers associated with the calculation procedure. |
| *Default procedure =* | loads a value into a field on a form automatically when the field has been selected for entry. The default procedure determines the default value, if any, for an attribute. |
| *Edit procedure =* | defines a set of validity constraints, or edit rules, for one or more attributes. An edit rule contains an attribute specifier (since an edit procedure may be associated with more than one attribute), a Boolean expression that represents the edit rule, and an error message to display if the edit rule fails. |
| *Single-field edits =* | initiated whenever new data is entered for the attribute on a form. |
| *Cross-field edits =* | initiated for any field which has received new data on a form whenever the OK, MORE, or SIGN actions is selected by the user. It is also initiated for any fields designated in the form definition as REQUIRED if that field has been enabled for entry. They are used to check consistency between the field they are associated with and other data in the database (e.g. that the dose, concentration, and amount of an IV drip are consistent). |
| *List procedure =* | used to select a subset of list elements, based upon some algorithm, from a superset of possible list elements. The superset is defined in a list table. |

A list procedure is invoked whenever the associated field is selected and enterable.

**Dialog node =** interacts with the forms manager to control data display and entry. Makes requests to the forms manager to display data on various forms and receive notification of various events.

**Event =** generated as a result of an action, either triggered by user action or as an incoming graph arc to the node.

**Export =** individual node or graph can export data.

**Forms manager =** translates user actions into events and sends those events to the graph manager.

**Graph =** the coordinating logic of an application is expressed as a set of function graphs.

**Directed graph =** same as a function graph.

**Exit graph =** the last node in a graph, it copies its graph's export values from its blackboard to the calling graph's blackboard and pops the blackboard stack. It handles a graph's export attributes.

**Function graph =** a set of nodes and interconnecting arcs. Permits an application to be divided into a number of independent but ccoperating parts. Each node on the graph has a self-contained function that it performs when invoked.

**Graph manager =** coordinates execution of an application expressed as a directed graph, including screening incoming events, calling DECL's at appropriate times, handles dialog node sequencing, and import/export data flow.

**Graph table =** entries in a table in a database that describe a function graph. They describe the sequencing between graph nodes and between graphs. Each entry in the graph table contains a source node name, an arc name (event), a destination node name, and the name of the graph containing the source node.

**Initialization graph =** the first node in a graph, it is a graph manager function that sets up the current graph's blackboard. When invoked, it creates a blackboard, copies the graph's imports onto the blackboard, and pushes the blackboard onto the blackboard stack. It handles a graph's import attributes.

**Nested graphs =** a graph containing a sub-graph.

**Sub-graph =** a graph comprising two or more nodes contained in a node of a graph.

**Import =** individual node or graph can import data.

**List =** a set of predefined choices for entry into a field.

**MORE =** the user selects the "MORE" icon on the form to request more information to be retrieved from the system for display on the form.

**NEW =** the user enters new data into a field.

**Node =** A portion of a function graph that performs a self-contained function when invoked. Nodes are interconnected by arcs representing events. Nodes specify what actions are to be carried out for each of these events. Each node in a function graph is structured as an event processor. The body of the node is an event loop, processing each incoming event in sequence, until the loop exits.

**Object action =** a well-defined set of operations that modifies the data structures associated with an object instance to reflect an event in the real world (e.g. create a physician's order; chart a medication).

**Object class =** a logical collection of data attributes which describe a class of items in the real world (outside of the system) and which are treated as a unit; e.g. Vital Signs (includes all related objects, such as Respiratory Rate, Blood Pressure, Heart Rate, Reflexes, etc.).

**Object instance =** each physical item that is being tracked by the system is represented by an instantiation of the appropriate object class.

**OK =** the user indicates he/she is done with this particular pop-up form.

**SIGN =** the user commits to the data he/she has entered.

**Trigger =** one of the independent variables in the equation that calculates the target attribute.

**APPENDIX B**

13

**PSEUDO-CODE**

GRAPH MANAGER

Initialize - includes initializing the blackboard stack with one blackboard and copying the first graph's imports from import/export table to the blackboard.

Do a Graph (first graph) - recursively process the first graph and all of its sub-graphs.

Optionally use exports from the first graph.

DO A GRAPH (graph) - this is recursive

Call graph_init (graph)

Get the next node.

While the node is not "graph_exit" do

If the node is sub-graph

    Do a Graph (node).

Else

    Call Start_Node (node).

    Get the next node.

Call graph_exit (graph).

Return.

GRAPH INIT (graph)

Create a blackboard.

Copy imports expected by the graph from the blackboard at the top of the stack to the new blackboard.

Push the new blackboard onto the blackboard stack.

Return.

GRAPH EXIT (graph)

Pop the top blackboard from the stack.

Copy the graph's exports from the popped blackboard to the parent graph's blackboard (at the top of the stack).

Destroy the popped blackboard.

Return.

START NODE (node)

Get the node's imports from the top blackboard on the stack.

Call the node code, passing in the imports (the node will export its exports before it returns).

Copy the node's exports to the top blackboard on the stack.

Return.

**Claims**

1. In a data processing system comprising a processing unit (4, Fig. 2), a memory unit for storing a plurality of procedures, and a terminal unit comprising display means (2) for displaying an information form (Fig. 3) to a terminal user, said information form comprising a plurality of display tiles, and input means (5) for enabling said terminal user to enter an event into said system in the form of data or a command regarding said information form by selecting a portion of said form comprising at least one of said display tiles, a method for processing said event by at least one of said procedures and for providing to said terminal user a visual indication thereof, wherein said at least one procedure is performed by a group of nodes (Fig. 12A), including an initialization node (501) for handling initialization functions, a processing node (502, 503, or 504) for handling processing functions, and an exit node (505) for handling export functions, wherein the improvement comprises:

    (a) providing an import/export table (Fig. 10) for specifying import and export attributes for each of said nodes, said table specifying a list of attributes and whether each of said attributes is an import attribute, export attribute, or both;

(b) responsive to the entering of an event by said terminal user, initializing the specified import attributes of said initialization node with certain values passed to said group of nodes;

(c) importing said initialized attributes, and optionally at least one additional import attribute, into said processing node, then performing at least one pre-defined processing function on said attributes, and generating at least one export attribute;

(d) passing said at least one export attribute to said exit ncde and exporting same from said group of nodes;

(e) responsive to said at least one export attribute, providing a visual indication to said terminal user, utilizing at least one of said display tiles, that said event has been processed by said procedure.

2. The method according to claim 1, further comprising the steps of

(f) modifying said import attributes by said processing function (Fig. 14A); and

(g) discarding any modifications to said import attributes upon conclusion of said procedure by said group of nodes (Fig. 14D).

3. The method according to claim 1, further comprising the steps of

(f) modifying said export attributes by said processing function (Fig. 14A); and

(g) discarding any modifications to said export attributes upon conclusion of said procedure by said group of nodes (Fig. 14D).

4. In a data processing system comprising a processing unit, a memory unit for storing a plurality of procedures, and a terminal unit comprising display means for displaying an information form to a terminal user and input means for said terminal user to enter events into said system in the form of data and commands to said system, a method for handling said events by at least one of said procedures, wherein said at least one of said procedures is carried out by a plurality of nodes (252, 254, 256), each node functioning as an event processor, wherein the improvement comprises:

providing an input and/or export table (Fig. 10) for specifying the import and/or export variables for each of said nodes.

5. A method of constructing and executing an application comprising a plurality of procedures in a data processing system, wherein the improvement comprises:

(a) representing at least one of said procedures by a function graph (509, FIG. 12D), wherein said function graph comprises

    i.     an initialization node (515) for handling initialization functions;

    ii.    a dialog node (516, 517, 518) for handling processing functions;

    iii.   an exit node (519) for handling export functions; and

(b) providing an import and/or export table (FIG. 10) for specifying the import and/or export variables for each of said nodes.

FIG. 1

PHYSICIAN 301

PHYSICIAN ORDER SHEET
STANDING ORDERS

300

PHYSICIAN ORDERS
306

NURSING ORDERS
308

NURSING CARE PLAN

331

PLAN OF CARE

KARDEX 310

TASK LIST
312

REQUISITIONS
314

302

333

315

304

FLOWSHEET 323

MEASUREMENTS
TEST RESULTS
CALCULATIONS
316

DIAGNOSTIC RESULTS 326

PHYSICIAN
& NURSE
OBSERVATIONS
318

PROGRESS NOTES 324
PHYSICIAN ASSESSMENT 328
NURSE ASSESSMENT 330

INTERVENTIONS
THERAPY
320

MEDICATION ADMINISTRATION 332
RECORD, ETC.
IV THERAPY
ETC. 336

337

335

HOSPITAL PROCEDURES

HOSPITAL STANDARDS OF CARE
HOSPITAL POLICY
REGULATIONS

322

303

NURSE
THERAPIST
ETC.

EP 0 430 716 A2

16

*FIG. 2*

NURSING STATION AND LOUNGE WORKSTATIONS

BEDSIDE WORKSTATION

BEDSIDE DEVICE

SYSTEM CONSOLE

FILE SERVER

PRINTER

EP 0 430 716 A2

| | | 01/07 07:00 | 08:00 | 09:00 | 10:00 | 11:00 | 12:00 | 13:00 | 14:00 | 15:00 | 16:00 |
|---|---|---|---|---|---|---|---|---|---|---|---|
| TEMP | | 98.6 | | | | | | | | | |
| HEART RATE | | 90 | 80 | 60 | 89 | 95 | 96 | 100 | 85 | | |
| BP | SYSTOLIC | 100 | 105 | 110 | 160 | 160 | 120 | 150 | 100 | | |
| | DIASTOLIC | 60 | 65 | 60 | 90 | 95 | 80 | 60 | 80 | | |
| | (MEAN) (SOURCE) | (73) | (78) | (76) | (113) | (116) | (93) | (90) | (85) | | |
| PA | SYSTOLIC | | 30 | | 30 | | 35 | | 30 | | |
| | DIASTOLIC | | 10 | | 10 | | 15 | | 10 | | |
| | (MEAN) | | (17) | | (17) | | (22) | | (17) | | |
| MEMO | C.V.P. | | 8 | | 8 | | 10 | | 8 | | |
| | C.O. | | 4.0 | | | | 5.2 | | | | |
| | C.I. | | 2.18 | | | | 2.84 | | | | |
| | S.V.R. | | 1180 | | | | 1080 | | | | |

**METRO MEDICAL CENTER** — JAN 07 14:00

BLOOD GAS RESULTS READY

JACKSON, DONALD M. 60 M 9NBURN
ATTENDING: CHARLES RICE, M.D. MR#: 87-19-46

SECTIONS: FLOWSHEET ORDERS NCP ASSESSMENT LABS R.T. KARDEX

FORMS: MEDS VITALS I&O LABS VENTILATOR

PAGE UP

SCROLL

PAGE DOWN

ADD PARAMETER CLOSE CHART

**FIG. 3**

FIG. 4

USER

*100* FORMS MANAGER GENERATES EVENTS BASED ON USER'S ACTIONS

*107* "LIST" PROCEDURES FOR CURRENT ATTRIBUTE

*102* "DEFAULT" PROCEDURE FOR CURRENT ATTRIBUTE

*101* GRAPH MANAGER

*104* "CROSS-EDITS" PROCEDURE FOR CURRENT ATTRIBUTE

DIALOG NODE *106*

*103* "EDIT" PROCEDURES FOR CURRENT ATTRIBUTE

"CALCULATION" PROCEDURE FOR CURRENT ATTRIBUTE *105*

# FIG. 5

F_ADT

**FIG. 6A**

**FIG. 6B**

F_INDEX

## FIG. 7

ON NOTE INVOCATION PASSED IN:

-INITIAL EVENT (ARC THAT INVOKED NODE IN FUNCTION GRAPH)
-IMPORTED ATTRIBUTES

DURING EXECUTION NODE
RECEIVES:

-PREDEFINED EVENTS
-APPLICATION DEFINED
 EVENTS
-DATABASE INFO

DURING EXECUTION NODE
OUTPUTS:

-DIALOG CONTROL
-DATABASE MODS
-MESSAGES
-DATABASE REQS

```
STATIC VARIABLE DECLARATIONS              ANY VARIABLES THAT NEED TO BE INITIALIZED AT COMPILE
DEFINES AND INCLUDES                      TIME

NODE (NODE_NAME)                          DECLARES BEGINNING OF NODE, ALONG WITH
   IMPORTS (ATTRIBUTE_LIST):              ATTRIBUTES THAT ARE IMPORTED AND EXPORTED
   EXPORTS (ATTRIBUTE_LIST):              AS WELL AS WHAT OBJECTS ARE USED BY THE NODE
   USES_OBJECTS (OBJECT_LIST):
   USES_STRUCTURES (STRUCTURE_LIST):

   LOCAL VARIABLE DECLARATIONS

   EVENT_LOOP
        CASE(EVENT_NAME_1):               EACH EVENT PROCESSED BY THE NODE HAS ITS OWN
            ELECTRA/C CODE TO PROCESS EVENT   CASE STATEMENT THAT DEFINES THE PROCESSING FOR
            BREAK;                        THAT EVENT. THE NODE STAYS IN THE EVENT LOOP
                                          UNTIL AN EXIT_NODE OR EXIT_NODE_SAME IS DONE
        CASE(EVENT_NAME_2):
        CASE(EVENT_NAME_3):               TWO EVENTS WITH THE SAME PROCESSING MAY
            ELECTRA/C CODE TO PROCESS EVENT   SHARE THE SAME CASE STATEMENT.
            BREAK;
   END_EVENT_LOOP
```

ON NODE EXIT PASS OUT:

-ARC (EVENT) NAME TO EXECUTE IN FUNCTION GRAPH
-EXPORTED ATTRIBUTES

# FIG. 8

_220_

IMPORTED ATTRIBUTES

a
b

IMPORTED ATTRIBUTES

EXPORTED ATTRIBUTES

b

c
d

IMPORTED ATTRIBUTES

EXPORTED ATTRIBUTES

a
c

e
c

SHUTDOWN

EXPORTED ATTRIBUTES

d
e
c

_221_

INIT  GRPH_INIT  INIT

CENSUS

INDEX

F_CENSUS        INDEX        F_INDEX

READMIT

_223_         _225_

GRPH_EXIT   SHUTDOWN

_227_

# FIG. 9

GRAPH_X

_254_

a=1
d=0

a=1

NODE 1

_252_

a=2
b=?
c=8

NODE 2

a=2
d=0

c=9
x=7

a=3
c=9

c=5

NODE 3

a=2
b=?
x=7

_256_

a=3

GRAPH_Y

_260_

a=3

NODE 4

c=5

_258_

_250_

| IE_D TABLE ENTRIES: | | | |
|---|---|---|---|
| GRAPH_x | NODE_1 | NODE_2 | NODE_3 |
| a   I_E<br>d   I<br>c   E<br>b   L<br>x   L | a   I_E<br>b   E<br>c   E | a   I<br>d   I<br>c   E<br>x   E | a   I_E<br>b   I<br>x   I |
| GRAPH_y | NODE_4 | | |
| a   I<br>c   I_E | a   I<br>c   E | | |

## FIG. 10

| I_E | IMPORT_EXPORT |
|---|---|
| I | IMPORT |
| E | EXPORT |
| L | LOCAL |

## FIG. 11

## FIG. 13A

CURRENT BLACKBOARD → | X, Y, Z |

(INITIAL STACK)

## FIG. 13B

CURRENT BLACKBOARD →

| GRAPH B: X |
|---|
| GRAPH A: X, Y, Z |
| X, Y, Z |

(STACK AFTER GRAPH_INIT.
IN GRAPH B)

24

_501_

GRAPH
INITIALIZATION

_500_

_502_

GRAPH B
IMPORTS=X
EXPORTS=V

_503_

NODE 1A
IMPORTS=Y,Z
EXPORTS=Z,W

_504_

GRAPH C
IMPORTS=V,W,Z
EXPORTS=V

_505_

GRAPH
EXIT

GRAPH A:
IMPORTS = X, Y, AND Z
EXPORTS = V, W, AND Z

*FIG. 12A*

*FIG. 12B*

GRAPH B:
IMPORTS = X
EXPORTS = V

_506_

GRAPH
INITIALIZATION

_502_

_507_

NODE 1B
IMPORTS=X
EXPORTS=T

_508_

NODE 2B
IMPORTS=T,X
EXPORTS=T,V

_509_

GRAPH D
IMPORTS=T,X,V
EXPORTS=V

_510_

GRAPH
EXIT

GRAPH INITIALIZATION _511_

_504_

NODE 1C
IMPORTS=W,Z
EXPORTS=S _512_

NODE 2C
IMPORTS=S,V
EXPORTS=V _513_

GRAPH EXIT _514_

GRAPH C:
IMPORTS = V, W, AND Z
EXPORTS = V

*FIG. 12C*

*FIG. 12D*

GRAPH D:
IMPORTS = T, X, AND V
EXPORTS = V

GRAPH INITIALIZATION _515_

_509_

NODE 1D
IMPORTS=T,X
EXPORTS=R _516_

NODE 2D
IMPORTS=R,V
EXPORTS=R _517_

NODE 3D
IMPORTS=R,X
EXPORTS=V _518_

GRAPH EXIT _519_

*FIG. 13C*

CURRENT
BLACKBOARD →

| GRAPH B: X, T |
|---|
| GRAPH A: X, Y, Z |
| X, Y, Z |

(STACK AFTER NODE 1B)

*FIG. 13D*

CURRENT
BLACKBOARD →

| GRAPH D: T, X, V, R |
|---|
| GRAPH B: X, T, V |
| GRAPH A: X, Y, Z |
| X, Y, Z |

(STACK AFTER NODE 3D)

*FIG. 13E*

CURRENT
BLACKBOARD →

| GRAPH A: X, Y, Z, V |
|---|
| X, Y, Z |

(STACK AFTER GRAPH B RETURN)

*FIG. 13F*

CURRENT
BLACKBOARD →

| GRAPH C: V, W, Z, S |
|---|
| GRAPH A: X, Y, Z, V, W |
| X, Y, Z |

(STACK AFTER NODE 2C)

*FIG. 13G*

CURRENT
BLACKBOARD →

| X, Y, Z, V, W |
|---|

(STACK AFTER GRAPH A)

START

521 — INITIALIZE BLACKBOARD STACK

523 — COPY FIRST GRAPH'S IMPORTS TO THE BLACKBOARD

525 — EXECUTE GRAPH_INIT SEE C

527 — CURRENT NODE GRAPH_EXIT?

YES

NO

EXECUTE CURRENT NODE SEE B — 529

SET CURRENT NODE TO NODE CONNECTED TO EXITING ARC FROM PREVIOUS CURRENT NODE — 531

CALL GRAPH_EXIT SEE D

533

END

*FIG. 14A*

B

GET NODE'S IMPORTS FROM
TOP BLACKBOARD ON STACK *535*

IS NODE A
SUBGRAPH? *537*

NO → EXECUTE CODE *539*

EXPORT NODE
VARIABLES
TO BLACKBOARD *540*

END
B

YES

*538* EXECUTE GRAPH_INIT
SEE C

CURRENT NODE
GRAPH_EXIT? *541*

YES

NO

EXECUTE CURRENT NODE
SEE B *543*

COPY NODE'S EXPORTS TO
TOP BLACKBOARD ON STACK *545*

SET CURRENT NODE TO
NODE CONNECTED TO
EXITING ARC FROM
PREVIOUS CURRENT NODE *547*

CALL GRAPH_EXIT
SEE D
*549*

END
B

*FIG. 14B*

C

CREATE A BLACKBOARD — *551*

COPY IMPORTS EXPECTED BY GRAPH
FROM THE BLACKBOARD AT TOP
OF STACK TO NEW BLACKBOARD — *553*

PUSH NEW BLACKBOARD ONTO
THE BLACKBOARD STACK — *555*

END
C

## *FIG. 14C*

## *FIG. 14D*

D

POP TOP BLACKBOARD
FROM THE STACK — *557*

COPY GRAPH'S EXPORTS FROM POPPED
BLACKBOARD TO THE PARENT GRAPH'S
BLACKBOARD (AT TOP OF STACK) — *559*

DESTROY POPPED BLACKBOARD — *561*

END
D